(19) Europäisches Patentamt
European Patent Office
Office européen des brevets

(11) Numéro de publication : **0 352 159 B1**

# (12) FASCICULE DE BREVET EUROPEEN

(45) Date de publication du fascicule du brevet : **04.08.93 Bulletin 93/31**

(51) Int. Cl.[5] : **H04L 27/14**

(21) Numéro de dépôt : **89401886.0**

(22) Date de dépôt : **30.06.89**

## (54) Procédé et dispositif de démodulation de signaux à enveloppe constante et phase continue modulés angulairement par un train de symboles binaires, tolérant les dérives de fréquence.

(30) Priorité : **19.07.88 FR 8809731**

(43) Date de publication de la demande : **24.01.90 Bulletin 90/04**

(45) Mention de la délivrance du brevet : **04.08.93 Bulletin 93/31**

(84) Etats contractants désignés : **DE GB IT**

(56) Documents cités : **US-A- 3 938 052**

(73) Titulaire : **THOMSON-CSF**
**51, Esplanade du Général de Gaulle**
**F-92800 Puteaux (FR)**

(72) Inventeur : **Auger, Gérard**
**THOMSON-CSF SCPI**
**F-92045 Paris la Défense Cédex 67 (FR)**
Inventeur : **Laurent, Pierre André**
**THOMSON-CSF SCPI**
**F-92045 Paris la Défense Cédex 67 (FR)**
Inventeur : **Mocchi, Patrick**
**THOMSON-CSF SCPI**
**F-92045 Paris la Défense Cédex 67 (FR)**

(74) Mandataire : **Courtellemont, Alain et al**
**THOMSON-CSF, SCPI, B.P. 329, 50, rue Jean-Pierre Timbaud**
**F-92402 Courbevoie Cédex (FR)**

**EP 0 352 159 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

L'invention se rapporte à la démodulation de signaux d'information binaires transmis par modulation angulaire d'une porteuse, et a plus particulièrement pour objet un procédé, et le dispositif correspondant, de démodulation de signaux à enveloppe constante et phase continue modulés angulairement par un train de symboles binaires, en anglais modulation "CPM" pour "continuous phase modulation", tolérant les dérives de fréquence importantes.

Les modulations à enveloppe constante sont largement utilisées actuellement dans les radiocommunications du fait de leur immunité aux distorsions non linéaires d'amplitude. La modulation de fréquence à phase continue, dans laquelle la variation de phase due à un élément binaire peut être étalée sur plusieurs périodes bits présente des propriétés intéressantes en ce qui concerne l'encombrement spectral, assez réduit.

Classiquement la démodulation est réalisée soit dans un démodulateur cohérent, avec une référence de phase, par discriminateur, soit dans un démodulateur non cohérent qui peut être de type différentiel.

D'une manière générale, on sait effectuer la démodulation de signaux analogiques modulés en phase par des circuits entièrement numériques, en échantillonnant le signal reçu et en traitant les échantillons résultants, comme décrit par exemple dans un brevet US n° 3 938 052.

Lorsque le canal de transmission est dit "à sauts de fréquence", c'est-à-dire lorsque la fréquence de la porteuse varie par paliers, selon une séquence pseudo-aléatoire, les paliers étant de durée fixe, chaque palier permet la transmission d'un certain nombre de bits, soit $n_b$. Lorsque de plus la modulation appliquée est une modulation angulaire à phase continue, l'imperfection du canal de transmission, les dérives en fréquence "Doppler" très importantes lorsque le démodulateur est embarqué (par exemple sur un avion), l'instabilité des oscillateurs de la chaîne de réception, etc... perturbent le signal. Ces différentes dégradations se traduisent par des dérives en fréquence.

L'effet de ces dérives en fréquence, sur des signaux à enveloppe constante et phase continue modulés angulairement par un train de symboles binaires, est d'ajouter une composante continue aux signaux utiles traités. Avec un dispositif de démodulation à seuil fixe, la composante continue produit un décalage du diagramme de l'oeil par rapport à son niveau nominal, accroissant ainsi le taux d'erreur par bit. Un dispositif de démodulation utilisant un filtrage passe haut est mis en défaut par les suites de bit identiques, et cette situation se produit avec un grande probabilité dans les liaisons à sauts de fréquence avec des paliers courts et donc peu de bits par palier. Les techniques de démodulation par phase différentielle ou par discriminateur ne sont donc pas applicables en présence de fortes dérives de fréquence.

Le procédé selon l'invention consiste à effectuer des traitements numériques en bande de base, sur la phase du signal suréchantillonnée par rapport à la période bit. Ce procédé suppose acquise la synchronisation palier, et il procède à la démodulation des bits en établissant conjointement la synchronisation bit et l'estimation de phase, puis la correction des dérives en fréquence.

Le procédé (et le dispositif correspondant) de démodulation angulaire à phase continue selon l'invention permet une démodulation correcte même en présence de fortes dérives en fréquence, avec des performances en sensibilité du même ordre que celles obtenues lorsque la dérive en fréquence est nulle, tout en restant compatible avec les liaisons à sauts de fréquence, même lorsque chaque palier à fréquence constante comporte peu de bits.

Selon l'invention un procédé de démodulation de signaux à enveloppe constante et phase continue consistant à effectuer un traitement numérique, par paliers de $n_b$ bits, d'un signal reçu ramené en bande de base dont la phase est suréchantillonnée par rapport à la période bit $T_b$, est caractérisé en ce qu'il consiste :

- dans une première phase, à mesurer q sous-ensembles de $n_b$ phases différentielles à la période bit, à partir d'instants de départ décalés les uns par rapport aux autres de fractions $T_b/q$ de cette période pour former des peignes d'échantillonnage à la période bit décalés,
- dans une deuxième phase, à corriger a priori ces sous-ensembles de phases différentielles par des écarts de phase associés à un ensemble de $\underline{d}$ dérives en fréquence prédéfinies, pour générer d.q ensembles de $n_b$ phases différentielles corrigées, et à en déduire d.q jeux de $n_b$ bits démodulés associés ;
- dans une troisième phase, à reconstituer les phases différentielles supposées émises à partir de chacun des jeux de $n_b$ bits démodulés, et à calculer pour chacun des d.q jeux de bits démodulés un critère de bruit tenant compte du jeu de phases différentielles reconstituées et du jeu de phases différentielles mesurées et corrigées en fonction d'une dérive prédéfinie,
- dans une quatrième phase, à sélectionner le jeu de $n_b$ bits qui minimise le critère de bruit, la dérive en fréquence prédéfinie qui lui est associée correspondant à une estimation grossière de la dérive réelle,
- dans une avant-dernière phase, à partir du jeu de bits démodulé sélectionné, à calculer une estimation fine de la dérive réelle par moyenne des écarts entre les phases différentielles mesurées et les phases différentielles reconstituées associées à ce jeu de $n_b$ bits,
- et dans une dernière phase à effectuer une démodulation des q jeux de phases différentielles après les avoir corrigés de l'écart de phase associé à l'estimation fine de la dérive réelle, à calculer pour chacun le critère de bruit, et à sélectionner parmi les jeux de bits résultant celui qui minimise le critère de bruit, le peigne d'échantillonnage qui lui est associé constituant la synchronisation bit.

L'invention a également pour objet un dispositif de démodulation destiné à la mise en oeuvre de ce procédé.

L'invention sera mieux comprise et d'autres caractéristiques apparaîtront à l'aide de la description qui suit en référence aux figures annexées.

Les figures 1, 2 et 3 forment l'organigramme du procédé de démodulation selon l'invention ;

La figure 4 est un schéma illustrant l'échantillonnage de la variation de phase du signal reçu et la formation des "peignes" d'échantillonnage associés ;

Les figures 5 et 6 représentent des schémas fonctionnels de deux parties du dispositif de démodulation selon l'invention ;

La figure 7 représente des courbes de variation du taux d'erreur en fonction du rapport signal sur bruit pour différentes valeurs de dérives en fréquence, et selon que le procédé selon l'invention est ou n'est pas utilisé.

Le procédé de démodulation selon l'invention s'effectue de la manière suivante, suivant l'organigramme représenté sur les figures 1 à 3 :

Le signal reçu par le récepteur est amplifié et filtré, puis ramené en bande de base par des moyens conventionnels ; la phase $\phi$ du signal recueilli en sortie de cette chaîne de traitement est échantillonnée à une fréquence $F_e$ au moins deux fois supérieure à la fréquence bit de façon à vérifier le critère de Nyquist, et telle que le nombre d'échantillons q prélevés pendant une période bit $T_b$ soit supérieur à une fraction k de la période bit $T_b$ correspondant à l'erreur de synchronisation bit admise, en plus ou en moins. Il est donc nécessaire de prélever des échantillons avant l'instant supposé de l'arrivée du premier bit du palier et après l'instant supposé de la fin du dernier bit de la séquence des $n_b$ bits d'un palier, en nombre égal à (2E(q/k)+1), E(q/k) désignant la partie entière de q/k. Sont donc disponibles après échantillonnage (q . $n_b$ + 2E(q/k)+1) échantillons de phase du signal.

Pour chaque nouvel échantillon, à un instant d'échantillonnage nTe, une phase différentielle élémentaire $d\phi_{n-1}$ correspondant à la variation de phase du signal entre l'échantillon prélevé n et l'échantillon immédiatement précédent, n-1, est calculée. Ainsi, il existe q . $n_b$ + 2E(q/k) phases différentielles élémentaires $d\phi_n$ pour un palier.

A partir de cet ensemble de phases différentielles élémentaires, des peignes d'échantillonnage sont construits de la manière suivante :

- une origine des temps pour chaque palier est définie par l'instant du premier échantillon $t_1$ ;
- à partir de cet instant d'origine, les q phases différentielles élémentaires $d\phi_1$,...$d\phi_q$ qui suivent sont additionnées de façon à calculer la phase différentielle $D\phi_1$ correspondant à une variation de phase sur une période de 1 bit ;
- puis à partir de l'instant du deuxième échantillon $t_2$ une autre addition est effectuée pour les q phases différentielles élémentaires suivantes $D\phi_2 = d\phi_2 +..+d\phi_{q+1}$ etc..,

$$D\varnothing_{n-q} = \sum_{i=n-q}^{n-1} d\varnothing_i \ ,$$

jusqu'à ne plus pouvoir calculer de phases différentielles sur une période de 1 bit. q . $n_b$ phases différentielles correspondant chacune à une variation de phase sur une période de 1 bit sont alors disponibles, chacune étant identifiée par l'instant d'échantillonnage $t_i$ correspondant à son origine. Les q premières de ces phases différentielles sont numérotées de 1 à q, puis les q suivantes sont également numérotées de q + 1 à 2q etc... Les phases différentielles affectées d'indices égaux modulo q, correspondant à des instants d'échantillonnages espacés d'une période bit forment une "classe" de phases différentielles

Chacune des q classes de $n_b$ phases différentielles constitue "un peigne d'échantillonnage", chacun correspondant à des instants équidistants de décisions possibles. Chaque peigne est identifié par le numéro de la classe 1 à q qu'il représente.

La figure 4 donne un exemple numérique de constitution de peignes d'échantillonnage. Dans cet exemple un palier comporte $n_b$ = 5 bits, et la synchronisation bit est connue à ± $T_b/2$ (k = 2). La période d'échantillonnage est telle que q = 4 échantillons sont prélevés pendant une période bit ; si $T_e$ est la période d'échantillonnage, la période bit est $T_b = 4T_e$. Il y a donc (4 x 5 + 2 E(4/2)+1) = 25 échantillons de phase du signal sur un palier ; 24 phases différentielles élémentaires $d\phi_i$, i = 1 à 24 sont donc calculées et 4 peignes d'échantillonnage constitués chacun de 5 phases différentielles $D\phi_i$ correspondant aux variations de phase successives sur des intervalles de durée égale à la période bit sont créés. Ces peignes d'échantillonnage sont décalés l'un par rapport au suivant d'une période d'échantillonnage. Les instants d'échantillonnage, pour un palier, et ces peignes sont représentés sur la figure 4 avec les 4 instants d'origine du calcul des phases différentielles les constituant.

L'étape suivante consiste à "égaliser" les q . $n_b$ phases différentielles ainsi classées, si nécessaire

(c'est pour cette raison que le cadre correspondant sur l'organigramme de la figure 1 est représenté en pointillés). En effet, certaines modulations angulaires, par exemple les modulations de fréquence à phase continue dites "à réponse partielle", produisent des variations de phase sur la durée d'une période symbole qui dépendent de plusieurs bits ; la contribution à la variation de phase due à cet étalement sur plusieurs bits, assimilée à de l'interférence inter symboles, doit être autant que possible réduite avant la démodulation pour permettre la prise de décision. Cette réduction est obtenue par l'opération "d'égalisation" qui peut être interprétée comme la recherche du symbole ayant généré la variation de phase.

Cette égalisation n'est appliquée que lorsque la phase différentielle sur une période symbole dépend de plusieurs bits du fait de la modulation, ou de toute autre cause provoquant de l'interférence intersymbole, par exemple, un filtrage non idéal. Elle sera décrite plus en détails ci-après.

L'étape suivante du procédé de démodulation, illustrée à partir du point A de l'organigramme sur la figure 2, consiste à corriger les phases mesurées en supposant que la dérive de fréquence est égale à l'une de plusieurs dérives de fréquence prédéfinies, réparties pour couvrir toute la gamme de dérive possible. A partir de l'évaluation d'une expression traduisant un critère de minimisation du bruit, les bits supposés émis dans les conditions envisagées sont démodulés. Les valeurs des dérives en fréquence prédéfinies sont choisies en nombre tel que le traitement total n'occupe pas un temps trop long, mais permette de balayer les possibilités les plus probables de dérives en fréquence et de parvenir rapidement à une bonne estimation de la dérive réelle. Cette étape du traitement, décrite plus en détails ci-après, peut être résumée succinctement de la manière suivante : une valeur de dérive en fréquence prédéfinie étant retenue, les phases différentielles égalisées de chacun des q peignes d'échantillonnage sont diminuées de la variation de phase égalisée correspondant à la dérive de fréquence envisagée : le signe des phases différentielles résultantes fournit le bit supposé émis. Les valeurs de dérives en fréquence prédéfinies sont telles que la rotation de phase engendrée par ces erreurs ne doit pas produire trop de décisions erronées pour l'évaluation de la puissance de bruit : en effet, par le jeu d'une dérive en fréquence prédéfinie, la phase différentielle égalisée voit son signe s'inverser, la "décision" sur la valeur supposée du bit est alors erronée.

A l'issue de cette étape de traitement il existe donc q jeux de $n_b$ bits, correspondant aux q peignes d'échantillonnage, pour chaque valeur de dérive en fréquence prédéfinie ; chaque jeu de $n_b$ bits permet alors de calculer des phases différentielles supposées engendrées à l'émission, c'est-à-dire d'effectuer une reconstitution des phases différentielles supposées émises qui correspondraient à ce jeu de bits et d'évaluer un "critère de bruit" fonction des phases différentielles reconstituées, des phases différentielles mesurées, et de la dérive supposée.

L'étape suivante consiste alors à choisir la dérive de fréquence et le jeu d'échantillons les plus appropriés, par la minimisation du critère de bruit évalué. Cette sélection peut se faire d'abord pour chaque valeur de dérive entre les q jeux possibles, puis entre les jeux sélectionnés associés aux différentes valeurs de dérive. Une estimation plus précise de la dérive de fréquence est alors effectuée, étape B, à partir des phases différentielles reconstituées et des phases différentielles mesurées pour le jeu de bits issu de la sélection.

Enfin, la dernière étape consiste à démoduler les q ensembles de phases différentielles (égalisées), après correction de ces phases différentielles en fonction de la dérive de fréquence estimée plus précisément dans la phase précédente, puis à sélectionner le jeu de $n_b$ bits résultant qui minimise le critère de bruit calculé comme précédemment en lui associant le peigne d'échantillonnage correspondant qui donne simultanément la synchronisation bit.

Bien entendu, cette dernière étape peut n'être effectuée qui si la dérive de fréquence est jugée estimée avec une précision suffisante. Un test destiné à le vérifier est effectué comme représenté sur la figure 3. Si ce n'est pas le cas, le procédé peut reprendre à l'étape "A", à partir d'un ensemble de dérives prédéfinies réparties dans une gamme plus étroite autour de la dérive estimée à l'issue du premier traitement.

Ces différentes étapes vont être décrites plus en détails ci-après, en liaison avec les figures 5 et 6 qui représentent des sous-ensembles du dispositif de démodulation.

La figure 5 représente une première partie du démodulateur. La chaîne de réception comporte l'antenne de réception HF, suivie de l'étage de réception HF,1, amplificateur et filtre, suivi de l'étage de transposition en fréquence intermédiaire, 2. Le signal ainsi transposé en fréquence intermédiaire est appliqué à l'entrée du dispositif de génération de phases différentielles 10 qui comporte un circuit de mesure de phase, 11 fournissant un signal continu caractéristique de la phase du signal appliqué à son entrée. Ce signal est appliqué aux entrées d'un circuit de différence, 12, respectivement par une voie directe et par une voie comportant un circuit à retard 13 qui impose un retard égal à la période d'échantillonnage $T_e = T_b/q$. Le signal de sortie de ce circuit de différence 12 est donc un signal continu à partir duquel peuvent être prélevées les phases différentielles élémentaires $d\phi_l$ entre des instants séparés d'une période d'échantillonnage, au moyen d'un échantillonneur 14 commandé par un signal d'horloge d'échantillonnage $H_e$ issu d'un circuit logique de commande 40 représenté sur la figure 6. Les phases différentielles élémentaires résultant de cet échantillonnage sont transmises à l'entrée d'une ligne à retard 15 à q étages. Les échantillons stockés dans cette ligne à retard sont transmis, à la période d'échantillonnage à un sommateur 16 qui calcule les phases différentielles successives $D\phi_n$ correspondant aux variations de phase sur une période de 1 bit,en décalant à chaque calcul d'un échantillon, par le jeu du décalage dans la ligne à retard.

Si la modulation employée et le filtrage à la réception génèrent des interférences intersymboles connues à priori, comme indiqué ci-dessus une étape d'égalisation est mise en oeuvre. Si l'on suppose par exemple que trois bits d'informations contribuent à une variation de phase différentielle sur une période de 1 bit, et si l'on considère qu'aucun bruit ni aucune dérive en fréquence ne modifie cette phase différentielle, celle-ci peut se mettre sous la forme :

$$D\phi_n = AI_{n-1} + BI_n + CI_{n+1} \text{ où les } I_k(k = n-1, n, n+1)$$

désignent les bits d'informations et valent ±1, A, B, C étant des coefficients constants. Selon la théorie des transformées en "z", l'expression ci-dessus se traduit par le polynôme P(z) défini comme suit :

$$P(z) = Az^{-1} + B + Cz.$$

L'égaliseur résulte du polynôme E(z) qui vérifie l'expression P(z).E(z) = 1, puisque par définition l'égalisation correspond à la recherche de l'inverse du polynôme P. Ce polynôme n'est pas causal et donc non réalisable physiquement mais il peut être approximé de la manière suivante :

$$E(z) = -\alpha z^{-1} + 1 - \beta z ;$$

$\alpha$ et $\beta$ sont deux constantes déterminées à partir des coefficients A, B et C en annulant les termes en $z^{-1} \cdot z$ du polynôme P(z).E(z). Ainsi les termes parasites sont au moins d'ordre 2 en z et $z^{-1}$. Ces techniques d'égalisation sont connues et l'on suppose donc dans la suite que les coefficients $\alpha$ et $\beta$ de l'égaliseur ont été préalablement calculés. (Si plus de trois bits génèrent la variation de phase exprimée ci-dessus et si l'on cherche à égaliser à un ordre plus élevé que l'ordre 2 en ajoutant les puissances désirées au terme en $z^{-1}z$, il est nécessaire de calculer un plus grand nombre de coefficients.)

Pour l'égalisation, le démodulateur représenté sur la figure 5 comporte un dispositif d'égalisation 20 correspondant à une modulation dans laquelle la variation de phase sur une période de 1 bit est étalée sur 3 bits d'information. Ce dispositif d'égalisation 20 comporte 2 lignes à retard de durée égale à 1 bit, 21 et 22 en série ; l'entrée de la ligne à retard 21 est reliée à une première entrée d'un multiplieur 23 dont la seconde entrée reçoit une information relative à un coefficient de multiplication $K_1$. De même les sorties des lignes à retard 21 et 22 sont respectivement reliées aux entrées de deux multiplicateurs 24 et 25 dont les autres entrées reçoivent respectivement des coefficients multiplicateurs $K_2$ et $K_3$. Ces coefficients $K_1$ $K_2$ et $K_3$ sont directement liés aux coefficients $-\alpha$, +1, et $-\beta$ du polynôme d'égalisation E(z). Les sorties de ces trois multiplicateurs sont reliées à l'entrée d'un sommateur 26 qui fournit donc une phase différentielle dite "égalisée", $E\phi$, en principe liée seulement à la valeur du bit d'information de rang correspondant. La sortie de ce sommateur est la sortie du dispositif d'égalisation. Bien entendu l'égalisation ne peut être réalisée de manière correcte que si les variations de phase sont suffisamment connues et qu'elles peuvent être modélisées linéairement par rapport aux bits d'informations qui la génèrent.

Un système d'aiguillage 30 permet de constituer les "peignes" définis ci-dessus à partir de la suite de valeurs différentielles de phase égalisées en sortie du dispositif d'égalisation, ces phases égalisées étant émises au rythme des échantillons. Ce dispositif d'aiguillage comporte un premier commutateur cyclique à q positions, 31, fonctionnant au rythme de l'horloge d'échantillonnage $H_e$, et qui permet d'aiguiller toutes les phases différentielles égalisées affectées du même numéro modulo q, vers l'une de q mémoires, 32(1), 32(2)...32(q). Les sorties de ces q mémoires sont reliées à des entrées correspondantes d'un dispositif d'aiguillage 33 à q entrées et une sortie qui est commandé au rythme de l'horloge bit $H_b$ obtenu par division de fréquence par q de l'horloge d'échantillonnage $H_e$ dans le circuit de commande 40 (figure 6). Ce dispositif d'aiguillage 33 permet de transférer les phases différentielles égalisées $E\phi$ mémorisées dans l'une des q mémoires, par paquets de $n_b$, et les traiter comme il sera expliqué ci-après.

Le dispositif réalisant la suite du traitement est représenté sur la figure 6 : il comporte le circuit logique de commande 40 qui commande la remise à zéro, l'écriture et la lecture des mémoires, la sélection des valeurs de dérive en fréquence, et les commutateurs. Pour simplifier la figure, les fils de commande correspondants n'ont pas été représentés. Il comporte également un générateur de phases différentielles égalisées associées aux dérives en fréquence prédéfinies,50, un circuit de différence 60 dont une première entrée est reliée à la sortie du dispositif d'aiguillage 33 et dont l'autre entrée est reliée à la sortie du générateur de phases différentielles associées aux dérives en fréquence prédéfinies 50, et qui génère les phases différentielles corrigées pour chaque valeur de dérive en fréquence prédéfinie.

La sortie du circuit 60 est reliée à un circuit 65 de décision +1/-1, qui à partir de chaque valeur de phase différentielle corrigée décide la valeur du bit correspondant supposé émis. Les suites de bits décidés correspondantes sont alors mémorisés dans l'une de q mémoires 72(1), 72(2)...72(q) via un commutateur cyclique à q positions 71, les sorties de ces mémoires étant reliées aux entrées d'un dispositif d'aiguillage à q entrées et 1 sortie, 73.

Ces mêmes suites de bits décidés sont transmises à un circuit 74 de reconstitution des phases différentielles égalisées supposées émises compte tenu des bits décidés. Ces valeurs de phases différentielles sont alors transmises à un circuit de différence 75 qui les compare aux valeurs correspondantes mesurées, après égalisation, disponibles à la sortie du circuit de différence 60.

Il est alors possible d'évaluer pour chaque jeu de $n_b$ bits, la moyenne des écarts quadratiques entre les phases différentielles mesurées et égalisées, et les phases différentielles égalisées reconstituées à partir des $n_b$ bits correspondants et de la dérive en fréquence prédéfinie. En réalité cela revient à évaluer l'écart quadratique moyen du "bruit" affectant la séquence de $n_b$ bits, si aucune erreur n'était commise lors de l'évaluation des phases différentielles émises. L'expression de la moyenne des écarts quadratiques, qui est le critère "de bruit", est la suivante :

$$C = \frac{1}{n_b} \sum_{k-1}^{n_b} \left[ (E\phi_k)_m - (E\phi_k)_r - \varepsilon\phi \right]^2$$

où $(E\phi_k)_m$ est la phase différentielle égalisée mesurée (disponible en sortie du circuit 30), $(E\phi_k)_r$ est la phase différentielle égalisée reconstituée à partir du jeu de bits sélectionné (disponible en sortie du circuit de reconstitution 74) et $\varepsilon\ \phi$ est la phase différentielle égalisée due à la dérive de fréquence (disponible en sortie du générateur 50).

Pour un bit de rang k dans une suite de $n_b$ bits, k compris entre 1 et $n_b$, le circuit de différence 75 calcule la différence $(E\phi_k)_m$-$(E\phi_k)_r$- $\varepsilon\ \phi$ et un détecteur quadratique 76 en calcule le carré. Ce détecteur est suivi d'un additionneur 77 qui additionne cette valeurs à la valeur précédente transmise à un accumulateur 78 et réappliquée à l'additionneur 77, de façon à calculer le critère de bruit correspondant à une suite de $n_b$ bits décidés. La sortie de cet accumulateur est reliée à un circuit logique de comparaison 79, associé à une mémoire de stockage du meilleur résultat, 80, qui compare, pour chaque suite de bits décidés, le critère de bruit calculé au critère de bruit précédemment stocké et le stocke à sa place s'il est inférieur.

Pour l'évaluation de ce critère, et durant tout le procédé, on suppose que la dérive est constante sur la durée d'un palier. Le processus de décision est donc le suivant : seul le jeu de $n_b$ bits pour lequel le critère est minimum, ainsi que le numéro d'identification du peigne d'échantillonnage correspondant sont retenus. Ce choix d'un jeu de $n_b$ bits et du peigne d'échantillonnage correspondant est effectué autant de fois qu'il y a de valeurs de dérive en fréquence prédéfinies, soit d fois.

Le critère du minimum de l'écart quadratique moyen, qui a servi à sélectionner l'un de tous les jeux de bits et des peignes d'échantillonnage associés pour une même valeur de dérive en fréquence prédéfinie, est appliqué de nouveau aux couples (jeux de $n_b$ bits, numéros de peignes d'échantillonnage) précédemment sélectionnés et correspondant chacun à une valeur de dérive en fréquence prédéfinie. A l'issue de ce traitement il ne demeure qu'un seul jeu de $n_b$ bits et un seul peigne d'échantillonnage, associés à une valeur de dérive en fréquence prédéfinie.

Le jeu de $n_b$ bits ainsi retenu est la séquence des $n_b$ bits supposée émise, disponible sur la sortie "bits décidés".

Le peigne d'échantillonnage conservé constitue la synchronisation bit, chacun des instants composant ce peigne s'avérant être le meilleur instant de décision ;

La valeur en fréquence prédéfinie retenue se révèle être une estimation grossière de la dérive en fréquence.

Comme indiqué ci-dessus, en moyennant $n_b$ différences entre les phases différentielles "reçues" mesurées et égalisées, soient $(E\phi_k)_m$, et les phases différentielles égalisées reconstituées soient $(E\phi_k)_r$ à partir du jeu des $n_b$ décidés, on obtient une estimation fine de la dérive en fréquence "réelle". Suivant la précision exigée pour le démodulateur, cette estimation peut être suffisante. Dans le cas contraire, comme indiqué ci-dessus, il est possible de répéter les traitements exposés ci-dessus jusqu'à l'obtention de la précision souhaitée en les appliquant à un ou plusieurs autres ensembles de valeurs de dérives en fréquence, réparties autour de l'estimation "grossière" de la dérive définie dans la phase précédente. Il faut cependant noter que la méthode converge rapidement et que bien souvent un seul traitement de ce type conduit à une précision suffisante sur la valeur de la dérive en fréquence.

Enfin, lorsque la dérive en fréquence est estimée avec suffisamment de précision, les traitements effectués précédemment pour une valeur de dérive prédéfinie sont répétés avec cette "valeur fine" de dérive pour fournir finalement les $n_b$ bits décidés, et la synchronisation bit correspondante.

L'évaluation des performances de ce procédé de démodulation a été faite en mesurant le taux d'erreur par bit en fonction du rapport signal sur bruit $E_b/N_0$, $E_b$ désignant l'énergie par bit, et $N_0$ la densité de bruit.

La figure 7 représente les courbes de taux d'erreur en fonction de ce rapport pour différentes valeurs de dérives en fréquence non corrigées, 0, 1600 Hz, 3200 Hz, obtenues par un procédé de démodulation classique dans le cas d'une démodulation SRC4, caractérisée par une vitesse de modulation de 36 Kbits par seconde et pour une liaison à sauts de fréquence comportant 18 bits par palier. Sur la même figure a été également représentée la courbe obtenue par le procédé de démodulation selon l'invention, avec l'erreur en fréquence maximale considérée précédemment soit 3200 Hz. Il apparaît que le procédé de démodulation proposé conduit à des performances dégradées seulement de l'ordre de 1 dB en présence de fortes dérives en fréquences par rapport aux performances obtenues dans un cas idéal en l'absence de dérive en fréquence.

L'invention n'est pas limitée aux modes de réalisation précisément décrits et représentés. En particulier on a décrit l'ensemble du procédé et du dispositif de démodulation en tenant compte d'une égalisation nécessaire seulement en cas d'interférence intersymbole. Bien entendu si la variation de phase due à un bit n'est pas étalée, cette égalisation n'est pas nécessaire, et les valeurs de dérives en fréquence prédéfinies se traduisent par des variations de phase qui peuvent être déduites directement des phases différentielles mesurées, bien entendu sans égalisation.

De plus, pour représenter d'une manière explicite le démodulateur, la représentation qui en a été faite montre des blocs fonctionnels. Bien entendu l'ensemble des fonctions correspondantes peut être traité au moyen d'un microprocesseur.

## Revendications

**1.** Procédé de démodulation de signaux à enveloppe constante et phase continue consistant à effectuer un traitement numérique, par paliers de $n_b$ bits, d'un signal reçu ramené en bande de base dont la phase est suréchantillonnée par rapport à la période bit $T_b$, caractérisé en ce qu'il consiste :

- dans une première phase à mesurer q sous-ensembles de $n_b$ phases différentielles à la période bit, à partir d'instants de départ décalés les uns par rapport aux autres de fractions $T_b/q$ de cette période pour former des peignes d'échantillonnage, à la période bit, décalés,
- dans une deuxième phase, à corriger a priori ces sous-ensembles de phases différentielles par des écarts de phase associés à un ensemble de $\underline{d}$ dérives en fréquence prédéfinies, pour générer d.q ensembles de $n_b$ phases différentielles corrigées, et à en déduire d.q jeux de $n_b$ bits démodulés associés ;
- dans une troisième phase, à reconstituer les phases différentielles supposées émises à partir de chacun des jeux de $n_b$ bits démodulés, et à calculer pour chacun des d.q jeux de bits démodulés un critère de bruit tenant compte du jeu de phases différentielles reconstituées et du jeu de phases différentielles mesurées et corrigées en fonction d'une dérive prédéfinie,
- dans une quatrième phase, à sélectionner le jeu de $n_b$ bits qui minimise le critère de bruit, la dérive en fréquence prédéfinie qui lui est associée correspondant à une estimation grossière de la dérive réelle,
- dans une avant dernière phase, à partir du jeu de bits démodulé sélectionné, à calculer une estimation fine de la dérive réelle par moyenne des écarts entre les phases différentielles mesurées et les phases différentielles reconstituées associées à ce jeu de $n_b$ bits,
- et dans une dernière phase à effectuer une démodulation des q jeux de phases différentielles après les avoir corrigés de l'écart de phase associé à l'estimation fine de la dérive réelle, à calculer pour chacun le critère de bruit et à sélectionner parmi les jeux de bits résultant celui qui minimise le critère de bruit, le peigne d'échantillonnage qui lui est associé constituant la synchronisation bit.

**2.** Procédé selon la revendication 1, caractérisé en ce que, la variation de phase due à un bit étant étalée sur plusieurs périodes bits du signal émis, les phases différentielles mesurées sont égalisées dans la première phase pour réduire l'effet d'étalement, tous les écarts de phase associés aux dérives en fréquence prédéfinies, puis les phases différentielles reconstituées déterminées durant le traitement étant égalisées de la même manière.

**3.** Procédé selon l'une des revendications 1 et 2, caractérisé en ce que, pour le calcul des q sous-ensembles de $n_b$ phases différentielles à la période de bit, le procédé consiste à échantillonner le signal en bande de base à la période Tb/q, à mesurer les variations de phases différentielles élémentaires entre échantillons successifs, et à sommer $n_b$ fois q phases différentielles élémentaires successives à partir d'un échantillon de départ pour former un sous-ensemble de $n_b$ phases différentielles, les autres sous-ensembles étant obtenus de la même manière après décalage au départ d'un échantillon.

**4.** Procédé selon l'une des revendications 1 et 2, caractérisé en ce que les $\underline{d}$ dérives en fréquence prédéfinies sont réparties dans la gamme de dérive en fréquence possible.

**5.** Procédé selon la revendication 4, caractérisé en ce que, à la fin de la quatrième phase, un test sur la précision de l'estimation grossière de la dérive réelle est effectué et en ce que si la précision est insuffisante, le procédé est repris à sa seconde phase à partir d'un autre ensemble de dérives en fréquences prédéfinies réparties autour de l'estimation grossière précédemment retenue.

**6.** Procédé selon l'une des revendications 1 et 2, caractérisé en ce que pour un jeu de bits démodulés tenant compte d'une dérive en fréquence, le critère de bruit est la moyenne des écarts quadratiques entre les phases différentielles mesurées, corrigées de l'écart de phase associé à cette dérive en fréquence, et les phases différentielles reconstituées correspondantes.

**7.** Dispositif de démodulation de signaux à enveloppe constante et phase continue, destiné à la mise en oeuvre du procédé selon l'une des revendications précédentes, caractérisé en ce qu'il comporte, commandés par un circuit de commande (40):

- un circuit (10) de mesure de q sous-ensembles de $n_b$ phases différentielles à partir d'un signal caractéristique de la phase d'un signal reçu à démoduler échantillonné à la période Tb/q,
- un circuit (20) d'égalisation des phases différentielles effectuant une combinaison linéaire de phases différentielles successives, si nécessaire, pour réduire l'effet d'étalement lorsqu'il existe,
- un circuit (30) d'aiguillage et de mémorisation pour constituer des sous-ensembles de phases différentielles mesurées et égalisées correspondant à des peignes d'échantillonnage décalés de fractions de période bit,
- un générateur (50) de phases différentielles égalisées associées à l'ensemble de dérives en fréquences prédéfinies,
- un circuit de différence (60) relié aux sorties du circuit d'aiguillage et de mémorisation (30) et du générateur (50)
- un circuit de décision (65) sur la valeur des bits, ayant une sortie reliée d'une part à un circuit d'aiguillage et de mémorisation des bits démodulés, et d'autre part à un circuit (74) de reconstitution des phases supposées émises en fonction de ces bits,
- un circuit de calcul d'un critère de bruit (75-78) relié à la sortie du circuit de différence (60) et à celle du circuit de reconstitution des phases supposées émises (74),
- et un circuit de comparaison à mémoire (79, 80) pour sélectionner parmi les jeux de bits mémorisés celui qui minimise le critère de bruit.

**8.** Dispositif de démodulation selon la revendication 7, caractérisé en ce que les fonctions de commande, de calcul, de mémorisation, de décision, et de sélection sont mises en oeuvre dans un microprocesseur qui traite les valeurs numériques de phases différentielles.

**Patentansprüche**

**1.** Verfahren zur Demodulation von Signalen mit konstanter Hülle und kontinuierlicher Phase, bei dem in Stufen von $n_b$ Bits ein empfangenes Signal numerisch behandelt wird, das in ein Basisband zurückgeführt ist und dessen Phase mit einer bezüglich der Bitperiode $T_b$ überhöhten Abtastrate abgetastet wird, dadurch gekennzeichnet, daß es darauf beruht,

- daß in einer ersten Phase q Untereinheiten von $n_b$ differentiellen Phasen bei der Bitperiode gemessen werden, und zwar ausgehend von Anfangszeitpunkten, die um Bruchteile $T_b/q$ dieser Periode gegeneinander versetzt sind, um versetzte Abtastkämme mit der Bitperiode zu bilden,
- daß in einer zweiten Phase a priori diese Untereinheiten von differentiellen Phasen durch Phasenhübe korrigiert werden, die einer Einheit von $\underline{d}$ vorbestimmten Frequenzabweichungen zugeordnet sind, um d.q Einheiten von $n_b$ korrigierten differentiellen Phasen zu erzeugen, und daß daraus d.q zugeordnete, demodulierte Sätze von $n_b$ Bits abgeleitet werden,
- daß in einer dritten Phase die differentiellen Phasen wieder hergestellt werden, von denen angenommen wird, daß sie ausgehend von einem jeweiligen demodulierten Satz von $n_b$ Bits abgegeben wurden, und daß für jeden der d.q demodulierten Bitsätze ein Geräuschkriterium berechnet wird, das den Satz von wiederhergestellten differentiellen Phasen und den Satz von differentiellen Phasen berücksichtigt, die gemessen und in Abhängigkeit von einer vorbestimmten Abweichung korrigiert wurden,
- daß in einer vierten Phase der Satz von $n_b$ Bits ausgewählt wird, der das Geräuschkriterium auf ein Minimum herabsetzt, wobei die ihm zugeordnete vorbestimmte Frequenzabweichung einer Grobabschätzung der reellen Abweichung entspricht,
- daß in einer vorletzten Phase ausgehend von dem ausgewählten demodulierten Bitsatz eine Endabschätzung der reellen Abweichung mittels Hüben zwischen den gemessenenen differentiellen Phasen und den wiederhergestellten differentiellen Phasen berechnet wird, die diesem Satz von $n_b$ Bits zugeordnet sind, und
- daß in einer letzten Phase q Sätze von differentiellen Phasen demoduliert werden,

nachdem sie um den Phasenhub korrigiert wurden, der der Endabschätzung der reellen Abweichung zugeordnet ist, daß für jeden das Geräuschkriterium berechnet wird, und daß unter den resultierenden Sätzen der ausgewählt wird, der das Geräuschkriterium auf ein Minimum herabsetzt, wobei der ihm zugeordnete Abtastkamm das Synchronisationsbit bildet.

**2.** Verfahren nach Anspruch 1, dadurch gekennzeichnet, daß bei der durch ein Bit bedingten Phasenvariation, die sich über mehrere Bitperioden des abgegebenen Signals erstreckt, die gemessenen differentiellen Phasen in der ersten Phase egalisiert werden, um den Erstreckungseffekt zu vermindern, wobei alle Phasenhübe, die den vorbestimmten Frequenzabweichungen zugeordnet sind, und dann die wiederhergestellten differentiellen Phasen, die während der Behandlung bestimmt wurden, gleichermaßen egalisiert werden.

**3.** Verfahren nach einem der Ansprüche 1 und 2, dadurch gekennzeichnet, daß das Verfahren für die Berechnung der q Untereinheiten von $n_b$ differentiellen Phasen bei der Bitperiode vorsieht, daß das Signal in dem Basisband mit der Periode Tb/q abgetastet wird, daß die Variationen von elementaren differentiellen Phasen zwischen aufeinanderfolgenden Abtastwerten gemessen werden, daß $n_b$ mal q aufeinanderfolgende elementare differentielle Phasen ausgehend von einem Anfangsabtastwert addiert werden, um eine Untereinheit von $n_b$ differentiellen Phasen zu bilden, wobei die anderen Untereinheiten nach einem Versatz des Anfangs eines Abtastwerts auf die gleiche Weise erhalten werden.

**4.** Verfahren nach einem der Ansprüche 1 und 2, dadurch gekennzeichnet, daß die $\underline{d}$ vorbestimmten Frequenzabweichungen in dem möglichen Frequenzabweichungsbereich verteilt sind.

**5.** Verfahren nach Anspruch 4, dadurch gekennzeichnet, daß am Ende der vierten Phase die Genauigkeit der Grobschätzung der reellen Abweichung getestet wird, und daß dann, wenn die Genauigkeit unzureichend ist, das Verfahren mit seiner zweiten Phase ausgehend von einer anderen Einheit vorbestimmter Frequenzabweichungen wiederaufgenommen wird, die um den zuvor zurückbehaltenen Grobschätzwert verteilt sind.

**6.** Verfahren nach einem der Ansprüche 1 und 2, dadurch gekennzeichnet, daß für einen Satz von demodulierten Bits, der eine Frequenzabweichung berücksichtigt, das Geräuschkriterium der Mittelwert der quadratischen Hübe ist, die zwischen den gemessenen differentiellen Phasen, die durch den Phasenhub korrigiert wurden, der dieser Frequenzabweichung zugeordnet ist, und den entsprechenden wiederhergestellten differentiellen Phasen vorliegen.

**7.** Vorrichtung zur Demodulation von Signalen mit konstanter Hülle und kontinuierlicher Phase, zur Durchführung des Verfahrens gemäß einem der vorhergehenden Ansprüche, dadurch gekennzeichnet, daß sie, durch eine Steuerschaltung (40) gesteuert, folgendes enthält:

- eine Schaltung (10) zum Messen von q Untereinheiten von $n_b$ differentiellen Phasen ausgehend von einem Signal, das für die Phase eines empfangenen, zu demodulierenden Signals charakteristisch ist, das mit der Periode Tb/q abgetastet wird,
- eine Schaltung (20) zum Egalisieren der differentiellen Phasen, die erforderlichenfalls eine Linearkombination von aufeinanderfolgenden differentiellen Phasen durchführt, um den Erstreckungseffekt, sofern vorhanden, zu verringern,
- eine Verzweigungs- und Speicherschaltung (30) zum Bilden von Untergruppen gemessener und egalisierter differentieller Phasen entsprechend den um Bruchteile einer Bitperiode versetzten Abtastkämmen,
- einen Generator (50) von egalisierten differentiellen Phasen, die der Einheit von vorbestimmten Frequenzabweichungen zugeordnet sind,
- eine Differenzschaltung (60), die mit den Ausgängen der Verzweigungs- und Speicherschaltung (30) und des Generators (50) verbunden ist,
- eine Schaltung (65) für eine Entscheidung über den Wert der Bits, die mit einem Ausgang einerseits mit einer Verzweigungs- und Speicherschaltung für die demodulierten Bits und andererseits einer Schaltung (74) zur Wiederherstellung der Phasen verbunden ist, von denen angenommen wird, daß sie in Abhängigkeit von diesen Bits abgegeben wurden,
- eine Schaltung (75 - 78) zum Berechnen eines Geräuschkriteriums, die mit dem Ausgang der Differenzschaltung (60) und dem der Schaltung (74) zur Wiederherstellung der Phasen verbunden ist, von denen angenommen wird, daß sie abgegeben wurden, und
- eine Vergleichschaltung (79, 80) mit Speicher, um unter den Sätzen von gespeicherten Bits den auszusuchen, der das Geräuschkriterium auf ein Minimum herabsetzt.

8. Demodulationsvorrichtung nach Anspruch 7, dadurch gekennzeichnet, daß die Funktionen zum Steuern, Berechnen, Speichern, Entscheiden und Auswählen durch einen Mikroprozessor ausgeführt werden, der die numerischen Werte von differentiellen Phasen verarbeitet.

## Claims

1. Method for demodulating constant envelope and continuous phase signals consisting in carrying out a digital processing, in batches of $n_b$ bits, of a received signal reduced to baseband whose phase is oversampled with respect to the bit period $T_b$, characterised in that it consists:
   - in a first phase in measuring q sub-sets of $n_b$ differential phases at the bit period, from starting instants shifted with respect to one another by fractions $T_b/q$ of this period in order to form, at the bit period, shifted sampling combs,
   - in a second phase, in correcting these subsets of differential phases a priori through phase deviations associated with a set of $\underline{d}$ predefined frequency drifts, in order to generate d.q sets of $n_b$ corrected differential phases, and in deducing therefrom d.q collections of $n_b$ associated demodulated bits;
   - in a third phase, in reconstituting the supposedly transmitted differential phases from each of the collections of $n_b$ demodulated bits, and in calculating for each of the d.q collections of demodulated bits a noise criterion taking account of the collection of reconstituted differential phases and for the collection of measured and corrected differential phases as a function of a predefined drift,
   - in a fourth phase, in selecting the collection of $n_b$ bits which minimises the noise criterion, the predefined frequency drift which is associated therewith corresponding to a rough estimation of the true drift,
   - in a penultimate phase, on the basis of the selected demodulated collection of bits, in calculating a fine estimation of the true drift by averaging the deviations between the measured differential phases and the reconstituted differential phases associated with this collection of $n_b$ bits,
   - and in a last phase, in carrying out a demodulation of the q collections of differential phases after having corrected them by the phase deviation associated with the fine estimation of the true drift, in calculating for each one the noise criterion and in selecting from the resulting collections of bits the one which minimises the noise criterion, the sampling comb which is associated therewith constituting the bit synchronisation.

2. Method according to Claim 1, characterised in that, the phase variation due to a bit being spread over several bit periods of the transmitted signal, the measured differential phases are equalised in the first phase in order to reduce the spread effect, all the phase deviations associated with the predefined frequency drifts, then the reconstituted differential phases determined during the processing being equalised in the same way.

3. Method according to one of Claims 1 and 2, characterised in that, in order to calculate the q subsets of $n_b$ differential phases at the bit period, the method consists in sampling the baseband signal at the period Tb/q, in measuring the elementary differential phase variations between successive samples, and in summing $n_b$ times q successive elementary differential phases from a starting sample in order to form a sub-set of $n_b$ differential phases, the other sub-sets being obtained in the same way after shifting at the start of a sample.

4. Method according to one of Claims 1 and 2, characterised in that the d predefined frequency drifts are distributed within the possible range of frequency drift.

5. Method according to Claim 4, characterised in that, at the end of the fourth phase, a test is carried out on the accuracy of the rough estimation of the true drift and in that if the accuracy is inadequate, the method is resumed at its second phase on the basis of another set of predefined frequency drifts distributed about the previously adopted rough estimation.

6. Method according to one of Claims 1 and 2, characterised in that for a collection of demodulated bits taking account of a frequency drift, the noise criterion is the average of the quadratic deviations between the measured differential phases corrected by the phase deviation associated with this frequency drift, and the corresponding reconstituted differential phases.

7. Device for demodulating constant envelope and continuous phase signals, intended for implementing the method according to one of the preceding claims, characterised in that it includes, controlled by a control circuit (40):
   - a circuit (10) for measuring q sub-sets of $n_b$

differential phases on the basis of a signal, characteristic of the phase of a received signal to be demodulated, sampled at the period Tb/q,

- a circuit (20) for equalising the differential phases carrying out a linear combination of successive differential phases, if necessary, in order to reduce the spread effect when it exists,
- a circuit (30) for routing and for storage in order to constitute sub-sets of measured and equalised differential phases corresponding to sampling combs shifted by bit period fractions,
- a generator (50) of equalised differential phases which are associated with the set of predefined frequency drifts,
- a difference circuit (60) connected to the outputs of the routing and storage circuit (30) and of the generator (50),
- a decision circuit (65) with regard to the value of bits, having an output connected, on the one hand, to a circuit for routing and for storing demodulated bits and, on the other hand, to a circuit (74) for reconstituting the supposedly transmitted phases as a function of these bits,
- a circuit for calculating a noise criterion (75-78) connected to the output of the difference circuit (60) and to that of the circuit for reconstituting the supposedly transmitted phases (74),
- and a comparison circuit with memory (79, 80) for selecting from the collections of stored bits, the one which minimises the noise criterion.

**8.** Demodulating device according to Claim 7, characterised in that the functions for control, for calculation, for storage, for decision and for selection are implemented in a microprocessor which processes the digital values of differential phases.

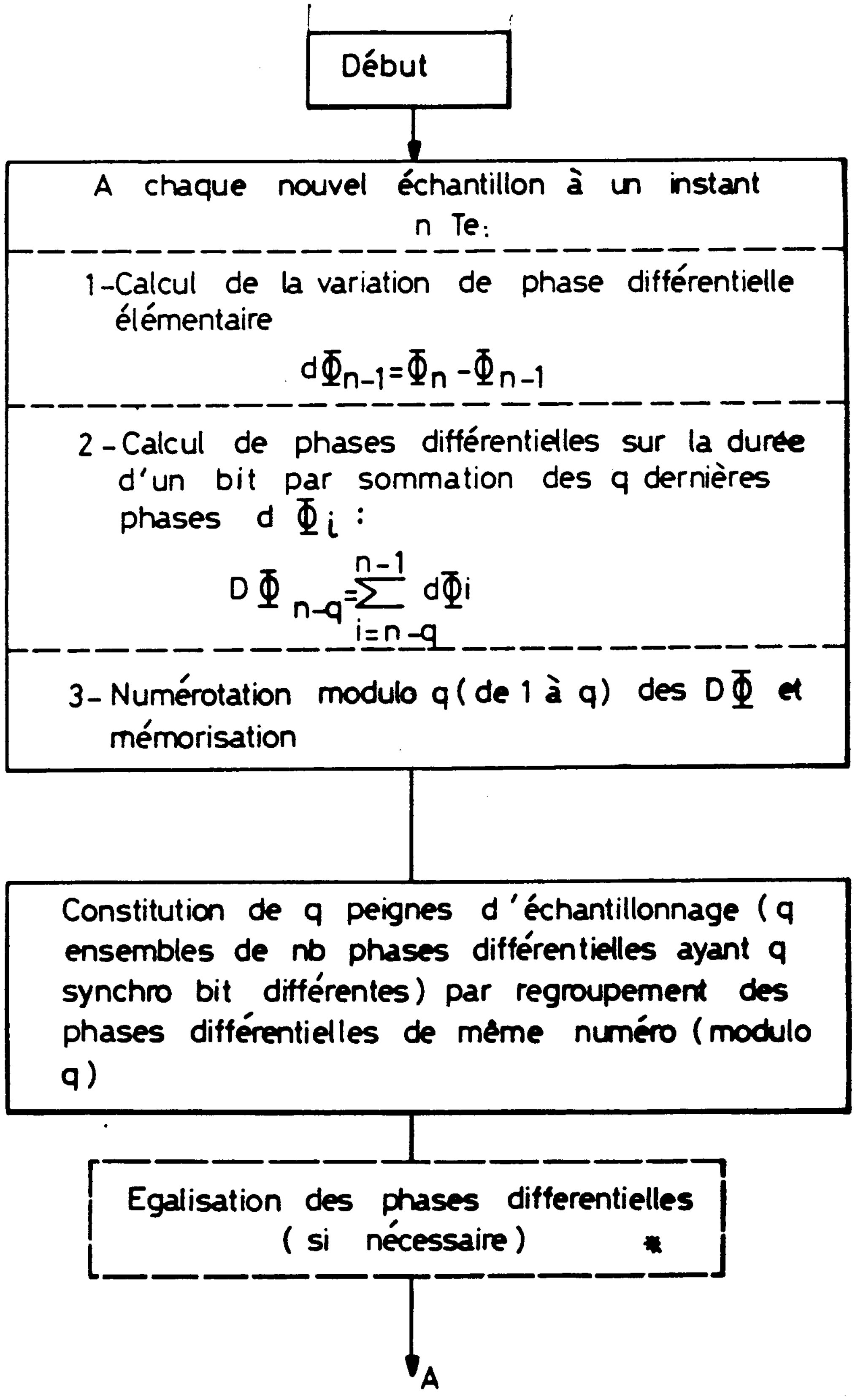
Début
A chaque nouvel échantillon à un instant n Te:
1-Calcul de la variation de phase différentielle élémentaire
$d\Phi_{n-1}=\Phi_n-\Phi_{n-1}$
2-Calcul de phases différentielles sur la durée d'un bit par sommation des q dernières phases $d\Phi_i$ :
$D\Phi_{n-q}=\sum_{i=n-q}^{n-1} d\Phi_i$
3-Numérotation modulo q (de 1 à q) des $D\Phi$ et mémorisation
Constitution de q peignes d'échantillonnage (q ensembles de nb phases différentielles ayant q synchro bit différentes) par regroupement des phases différentielles de même numéro (modulo q)
Egalisation des phases differentielles (si nécessaire) *
A

FIG_1

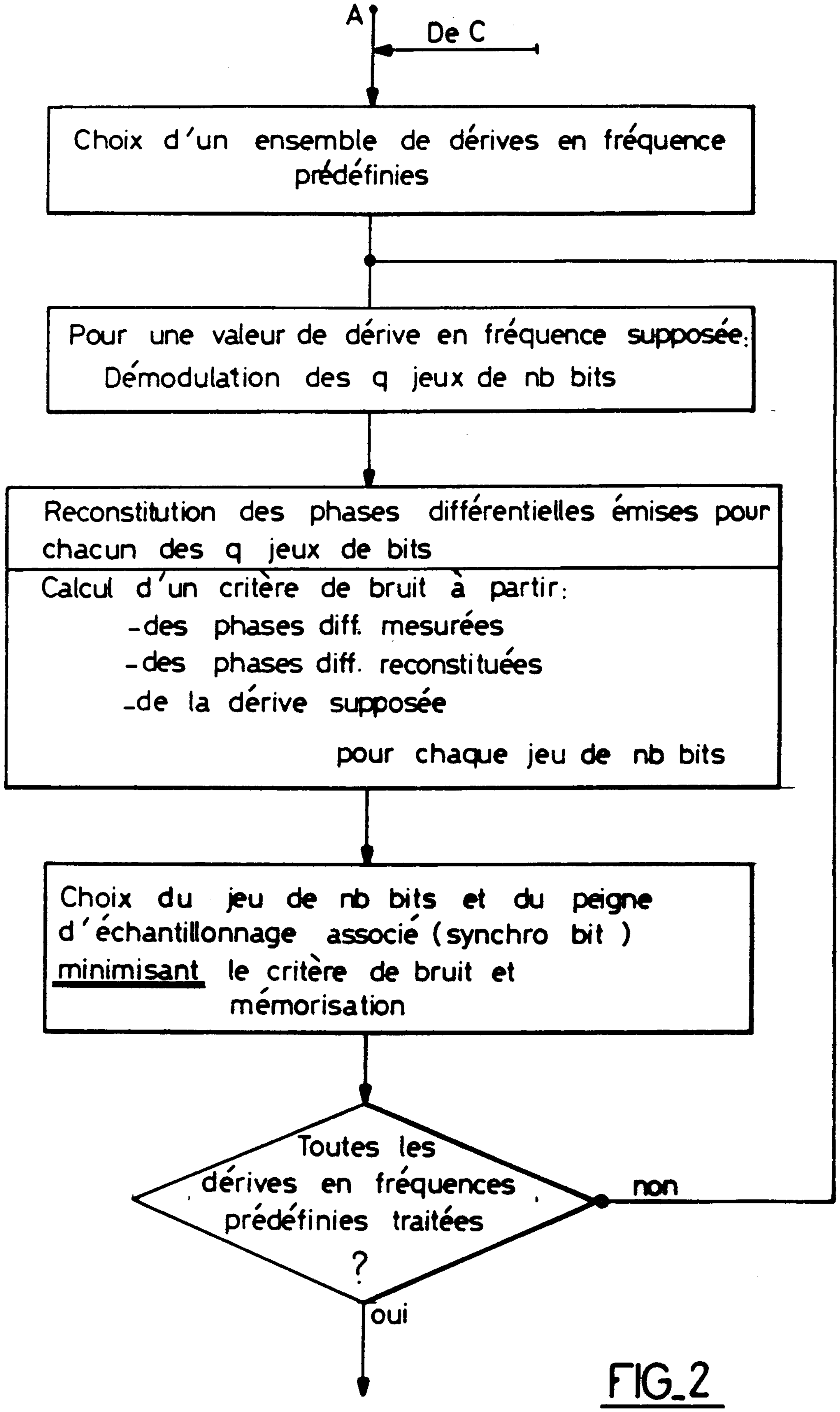
A
De C
Choix d'un ensemble de dérives en fréquence prédéfinies
Pour une valeur de dérive en fréquence supposée:
Démodulation des q jeux de nb bits
Reconstitution des phases différentielles émises pour chacun des q jeux de bits
Calcul d'un critère de bruit à partir:
-des phases diff. mesurées
-des phases diff. reconstituées
-de la dérive supposée
pour chaque jeu de nb bits
Choix du jeu de nb bits et du peigne d'échantillonnage associé (synchro bit) minimisant le critère de bruit et mémorisation
Toutes les dérives en fréquences prédéfinies traitées ?
non
oui

FIG_2

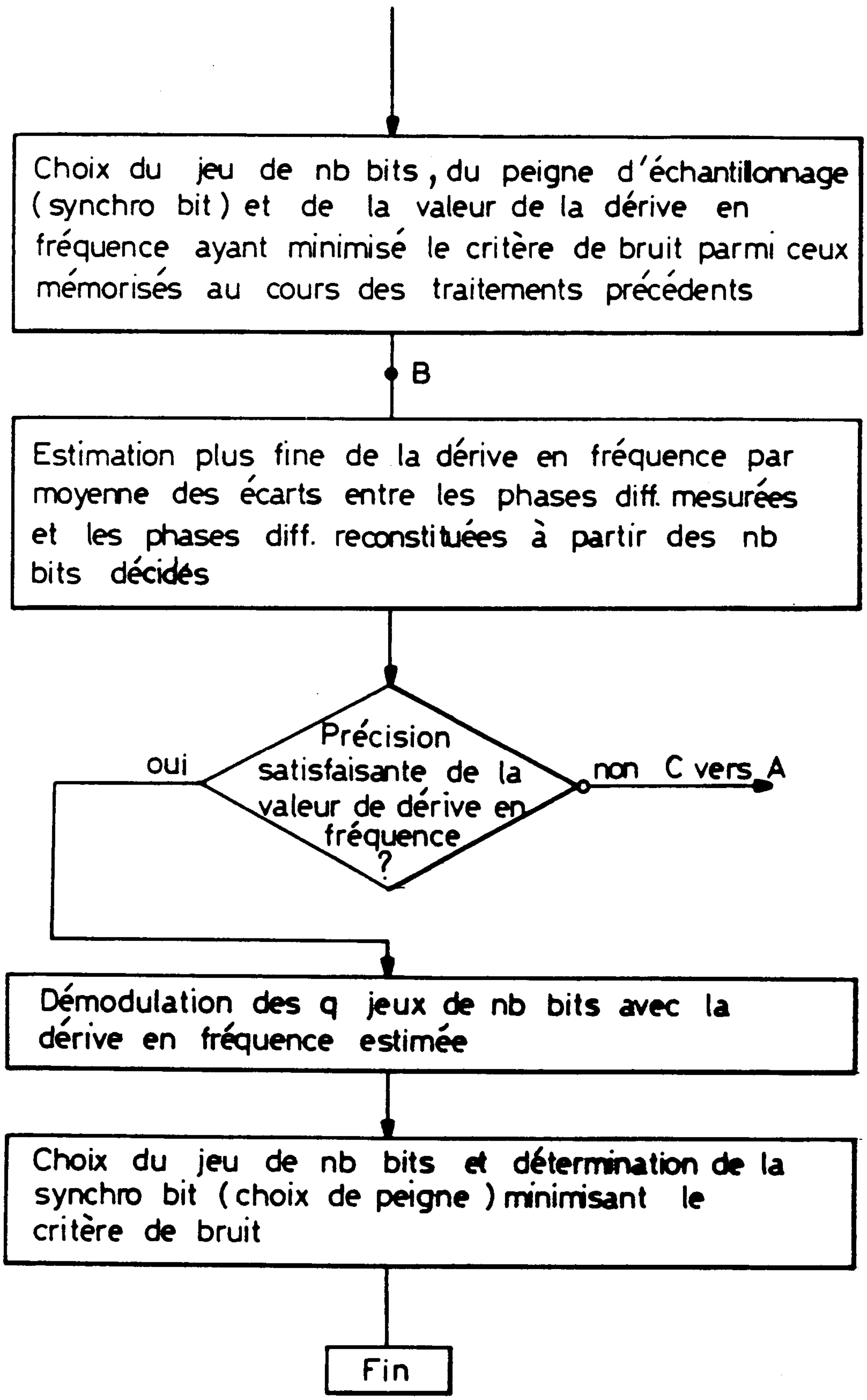
Choix du jeu de nb bits, du peigne d'échantillonnage (synchro bit) et de la valeur de la dérive en fréquence ayant minimisé le critère de bruit parmi ceux mémorisés au cours des traitements précédents
B
Estimation plus fine de la dérive en fréquence par moyenne des écarts entre les phases diff. mesurées et les phases diff. reconstituées à partir des nb bits décidés
Précision satisfaisante de la valeur de dérive en fréquence ?
oui
non C vers A
Démodulation des q jeux de nb bits avec la dérive en fréquence estimée
Choix du jeu de nb bits et détermination de la synchro bit (choix de peigne) minimisant le critère de bruit
Fin

FIG_3

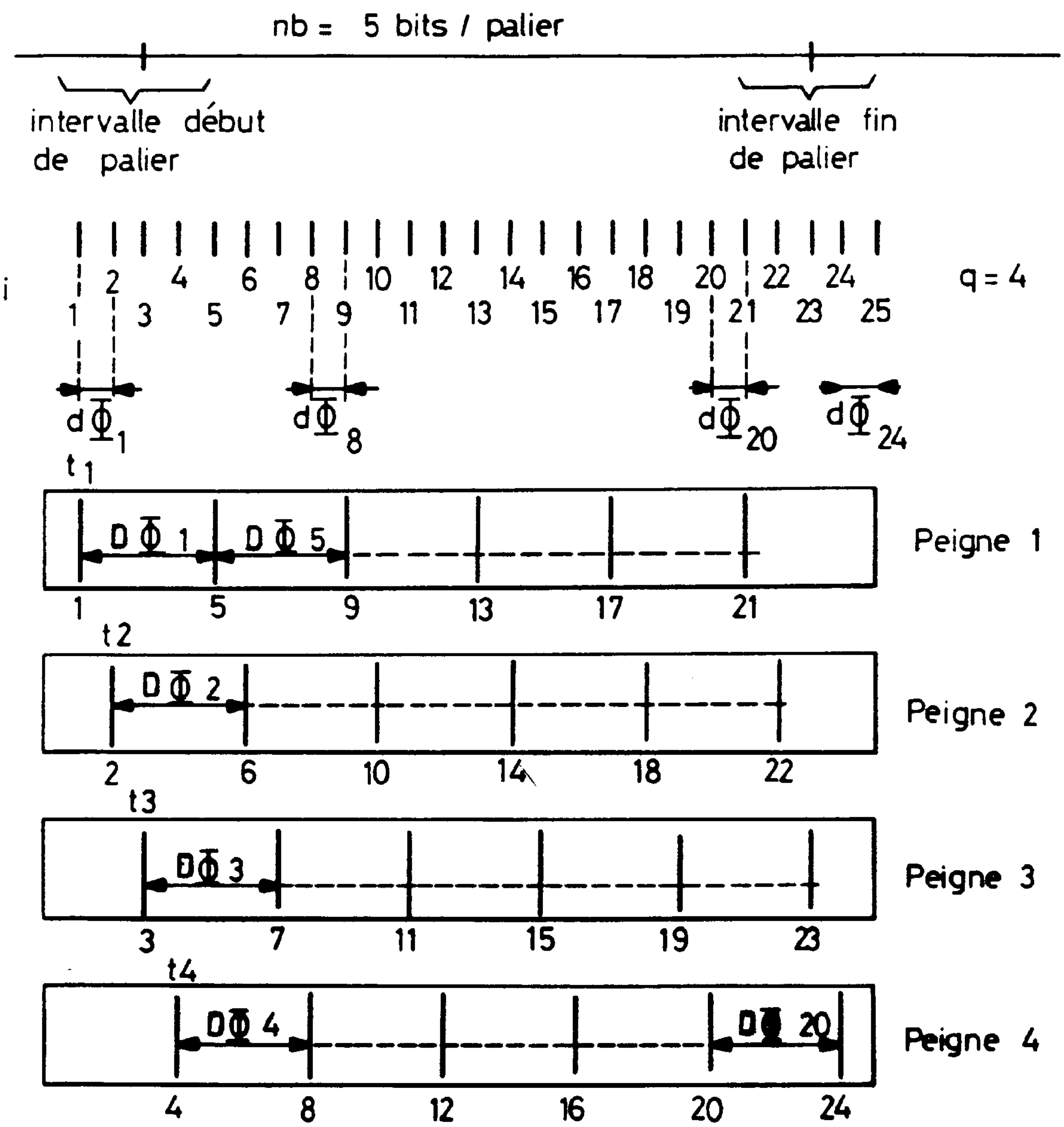
nb = 5 bits / palier
intervalle début de palier
intervalle fin de palier
i
1 2 3 4 5 6 7 8 9 10 11 12 13 14 15 16 17 18 19 20 21 22 23 24 25
q = 4
dΦ1
dΦ8
dΦ20
dΦ24
t1
DΦ 1
DΦ 5
1 5 9 13 17 21
Peigne 1
t2
DΦ 2
2 6 10 14 18 22
Peigne 2
t3
DΦ 3
3 7 11 15 19 23
Peigne 3
t4
DΦ 4
DΦ 20
4 8 12 16 20 24
Peigne 4

FIG_4

FIG_5

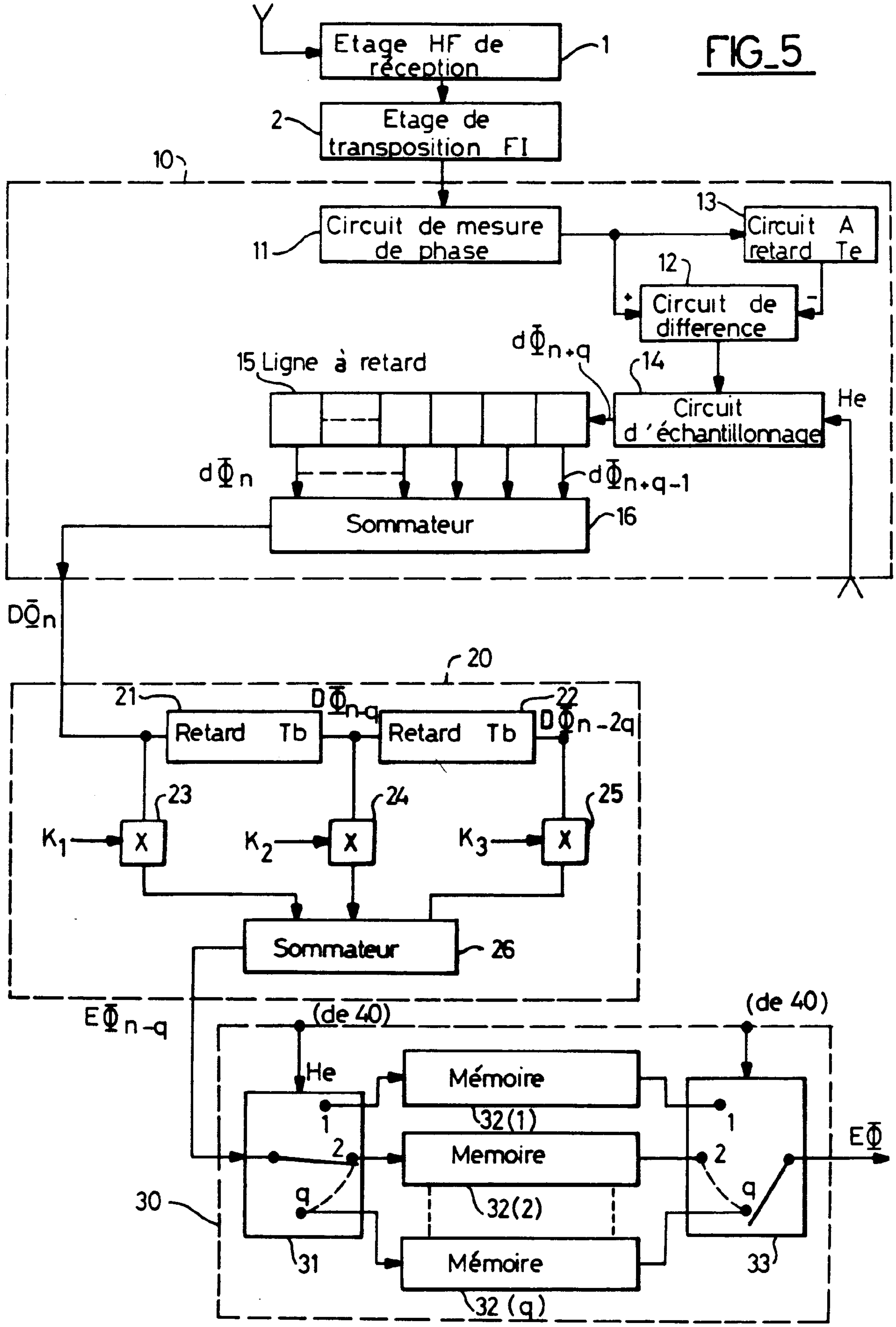
Etage HF de réception
1
2
Etage de transposition FI
10
Circuit de mesure de phase
11
13
Circuit A retard Te
12
Circuit de difference
+
-
$d\Phi_{n+q}$
14
15 Ligne à retard
Circuit d'échantillonnage
He
$d\Phi_n$
$d\Phi_{n+q-1}$
Sommateur
16
$D\Phi_n$
20
21
$D\Phi_{n-q}$
22
Retard Tb
Retard Tb
$D\Phi_{n-2q}$
23
24
25
$K_1$
$K_2$
$K_3$
X
X
X
Sommateur
26
$E\Phi_{n-q}$
(de 40)
(de 40)
He
Mémoire
32(1)
1
2
q
Memoire
32(2)
Mémoire
32 (q)
30
31
33
1
2
q
$E\Phi$

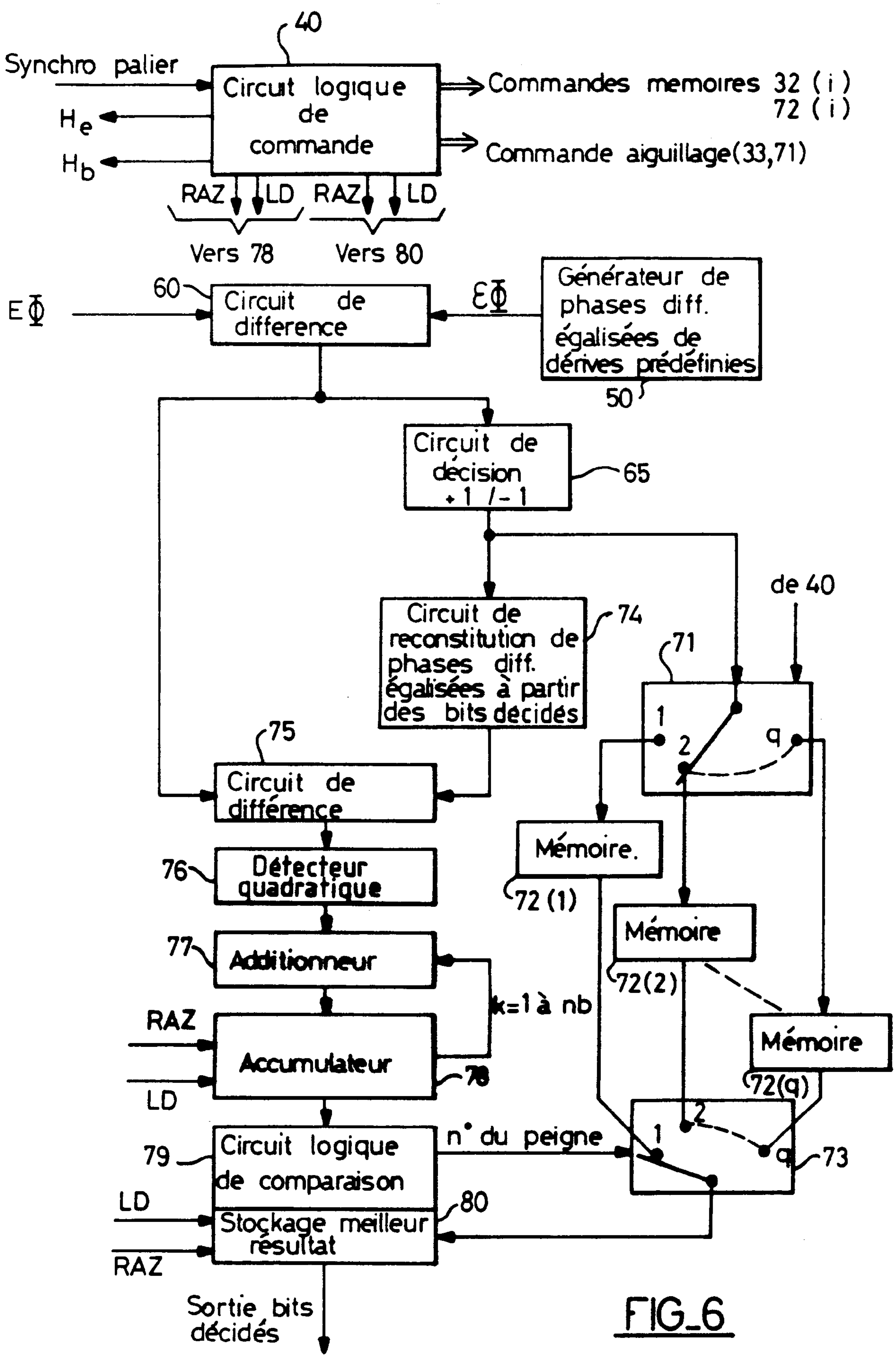
40
Synchro palier
Circuit logique de commande
$H_e$
$H_b$
Commandes memoires 32 (i)
72 (i)
Commande aiguillage(33,71)
RAZ
LD
RAZ
LD
Vers 78
Vers 80
60
EΦ
Circuit de difference
EΦ
Générateur de phases diff. égalisées de dérives prédéfinies
50
Circuit de décision +1 / -1
65
Circuit de reconstitution de phases diff. égalisées à partir des bits décidés
74
de 40
71
1
2
q
75
Circuit de différence
Mémoire.
72 (1)
76
Détecteur quadratique
Mémoire
72(2)
77
Additionneur
k=1 à nb
Mémoire
72(q)
RAZ
Accumulateur
78
LD
n° du peigne
1
2
q
73
79
Circuit logique de comparaison
80
LD
Stockage meilleur résultat
RAZ
Sortie bits décidés

FIG_6

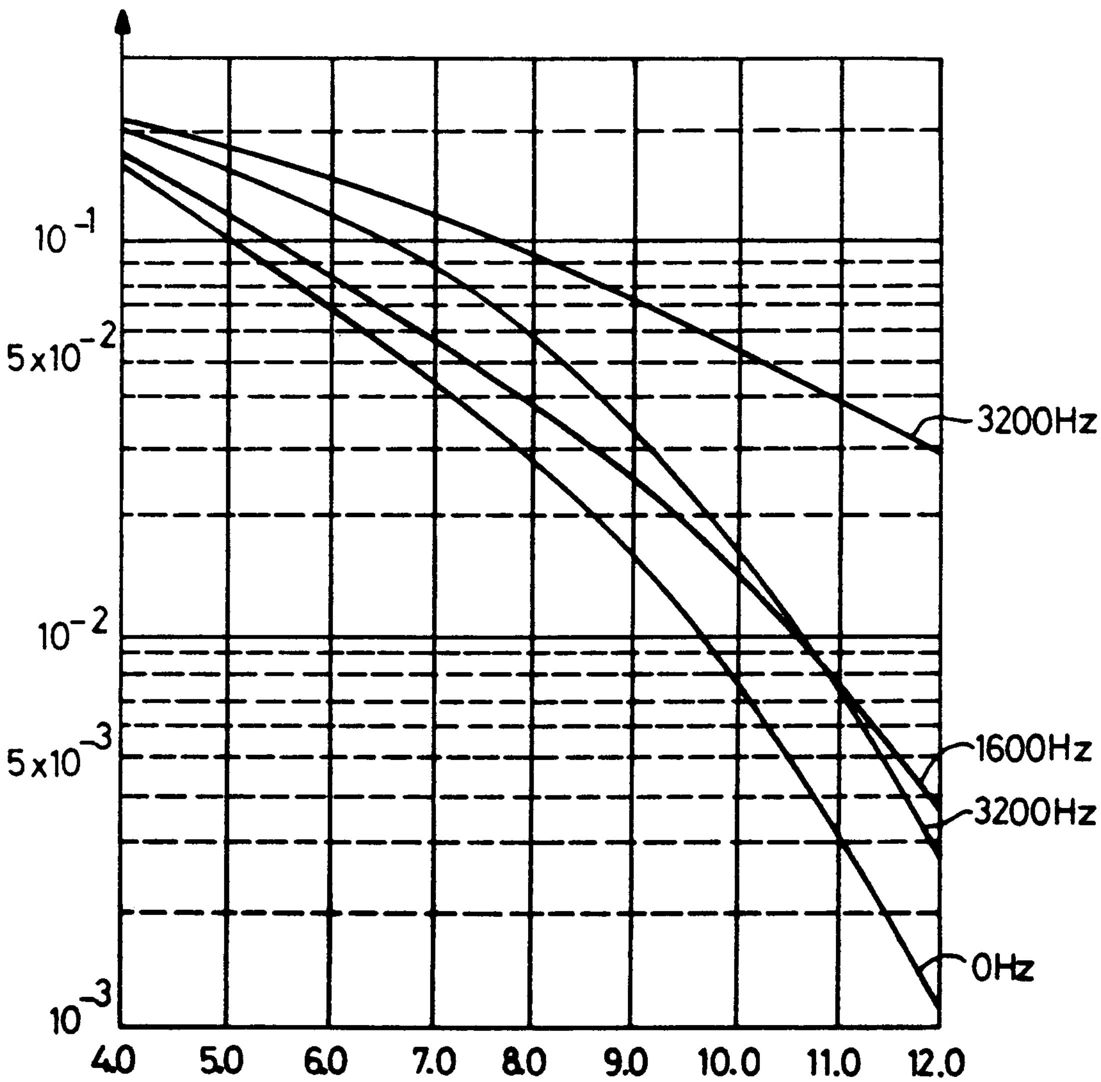
10^-1
5x10^-2
10^-2
5x10^-3
10^-3
4.0
5.0
6.0
7.0
8.0
9.0
10.0
11.0
12.0
3200Hz
1600Hz
3200Hz
0Hz

FIG_7